Europäisches Patentamt

European Patent Office

Office européen des brevets

(11) Numéro de publication: **0 067 750**
**A1**

(12) **DEMANDE DE BREVET EUROPEEN**

(21) Numéro de dépôt: **82400977.3**

(22) Date de dépôt: **26.05.82**

(51) Int. Cl.³: **B 23 Q 7/00**

(30) Priorité: **03.06.81 FR 8111003**

(43) Date de publication de la demande:
**22.12.82 Bulletin 82/51**

(84) Etats contractants désignés:
**AT BE CH DE GB IT LI LU NL SE**

(71) Demandeur: **CRI-DAN**
**21, rue de la Paix**
**F-75002 Paris(FR)**

(72) Inventeur: **Castelli, Benoît**
**6, avenue du Docteur Brouardel**
**F-75007 Paris(FR)**

(74) Mandataire: **Chameroy, Claude et al,**
**c/o Cabinet Malemont 42, avenue du Président Wilson**
**F-75116 Paris(FR)**

(54) Installation pour l'usinage des deux extrémités d'un produit long tel qu'un tube de forage pétrolier.

(57) Installation pour l'usinage des deux extrémités d'un produit long tel qu'un tube (T) de forage pétrolier, caractérisée en ce qu'elle comprend une machine (1) équipée de deux groupes complets d'usinage (A, B) disposés tête-bêche sur un bâti unique (2), cette machine (1) étant associée à des moyens de transfert (7, 8, 9, 14, 15) permettant d'assurer successivement l'introduction de l'une des extrémités du produit (T) dans le premier groupe d'usinage (A), puis, après usinage de cette extrémité, la translation longitudinale du produit (T) sur toute sa longueur à travers une ouverture (6) prévue à cet effet dans le bâti (2) de la machine (1), et l'introduction de l'autre extrémité du produit (T) dans le deuxième groupe d'usinage (B).

EP 0 067 750 A1

## Installation pour l'usinage des deux extrémités d'un produit long tel qu'un tube de forage pétrolier

La présente invention concerne une installation pour l'usinage des deux extrémités d'un produit long, conçue plus particulièrement pour l'usinage des tubes longs qui sont utilisés dans les forages pétroliers.

On connaît des installations comprenant une seule machine-outil spécialisée qui exécute une extrémité à la fois. Après usinage d'une extrémité, il est donc nécessaire de retourner les produits pour les réinjecter dans la machine, ce qui nécessite des moyens de manutention complexes et encombrants.

D'autres installations comportent deux machines identiques ou semblables en opposition qui permettent d'usiner successivement les deux extrémités du produit. De telles installations occupent une surface au sol importante en largeur. De plus, les distances entre les deux machines sont fixées une fois pour toutes en fonction de la longueur des produits à traiter et ne peuvent être modifiées aisément.

La présente invention a pour but principal de remédier à ces inconvénients et d'offrir la possibilité d'une autre implantation répondant mieux aux exigences ou contraintes de certains clients, et pour ce faire, elle a pour objet une installation du type susmentionné, qui se caractérise essentiellement en ce qu'elle comprend une machine équipée de deux groupes complets d'usinage disposés tête-bêche sur un bâti unique, cette machine étant associée à des moyens de transfert permettant d'assurer successivement l'introduction de l'une des extrémités du produit dans le premier groupe d'usinage puis, après usinage de cette extrémité, la translation longitudinale du produit sur toute sa longueur à travers une ouverture prévue à cet effet dans le bâti de la machine, et l'introduction de l'autre extrémité du produit dans le deuxième groupe d'usinage.

On obtient ainsi un ensemble compact et relativement peu encombrant, sans avoir à retourner les produits.

De plus, cette installation peut traiter indifféremment des
produits de longueurs différentes et présente donc une grande
souplesse d'utilisation.

Par ailleurs, l'utilisation d'une machine double unique permet
de réaliser des économies sur les fondations ainsi que sur certains organes de la machine qui peuvent être communs aux deux
groupes d'usinage.

Dans un mode de réalisation particulier de l'invention, les
moyens de transfert se composent essentiellement de couloirs
d'alimentation de type connu et de dispositifs à leviers permettant de transférer latéralement le produit d'un couloir à
l'autre.

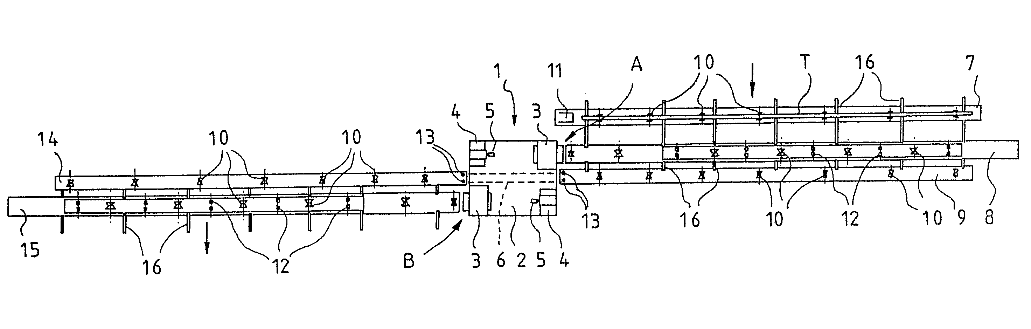

Une forme d'exécution de l'invention est décrite ci-après à
titre d'exemple, en référence au dessin annexé dans lequel la
figure unique est une vue schématique en plan d'une installation conforme à l'invention.

Cette installation comprend tout d'abord une machine outil 1
spécialement conçue pour l'usinage des deux extrémités d'un
produit long, en particulier un tube de forage pétrolier tel
que celui représenté en T. Conformément à l'invention, la machine 1 est équipée de deux groupes complets d'usinage, respectivement A et B, disposés tête-bêche sur un bâti unique 2.
Chacun de ces groupes d'usinage comprend notamment une poupée
3, à broche et mandrins intégrés, ou non avec ou sans contrepoupée 4. Dans l'hypothèse où l'on utilise une contrepoupée,
celle-ci est pourvue d'un mandrin expansible 5 permettant d'assurer le serrage de l'extrémité du tube par l'intérieur. Ce
mandrin 5 pourrait d'ailleurs être remplacé par une simple butée franche, le serrage du tube étant alors assuré uniquement
par les éléments de la poupée 3.

Le bâti 2 de la machine est par ailleurs pourvu dans sa partie médiane, entre les deux groupes d'usinage A et B, d'un tunnel longitudinal 6 à section circulaire permettant de faire passer le tube à travers le bâti.

L'installation selon l'invention comprend également un certain nombre de moyens de transfert pour les tubes T, constitués essentiellement par des couloirs d'alimentation de type connu en soi, équipés par exemple de diabolos coniques animés de mouvements de rotation contrôlés grâce à des motoréducteurs réversibles.

Dans l'exemple particulier décrit ici, l'installation comprend ainsi, du côté du premier groupe d'usinage A, un premier couloir d'alimentation 7 disposé en retrait parallèlement à l'axe longitudinal de la machine, un deuxième couloir 8 disposé dans l'axe de la broche du groupe d'usinage A et un troisième couloir 9 disposé dans l'alignement du tunnel 6. Le couloir 7 comporte des diabolos 10 et une butée d'arrêt 11. Le couloir 8 comporte des diabolos et des galets tels que 12 aptes à supporter le tube en rotation. Le couloir 9 est également équipé de diabolos et comporte une paire de galets presseurs motorisés 13 au voisinage de l'entrée du tunnel 6.

Du côté du groupe d'usinage B, l'installation comprend un quatrième couloir d'alimentation 14 identique au couloir 9, disposé dans l'alignement du tunnel 6, et un cinquième couloir 15, identique au couloir 8, disposé dans l'axe de la broche du groupe d'usinage B.

L'installation selon l'invention est complétée par des systèmes clasiques, à basculeurs ou leviers éjecteurs, non représentés sur la figure et qui permettent de transférer latéralement le tube T d'un couloir à l'autre. Au cours de son déplacement latéral, le tube reste maintenu par des traverses telles que 16 disposées entre les différents couloirs.

L'installation qui vient d'être décrite fonctionne de la manière suivante :

Au départ, le tube à traiter T est transféré latéralement ou
longitudinalement sur le premier couloir 7, jusqu'à venir en
butée sur 11, comme représenté sur la figure. Il est alors
transféré latéralement sur le deuxième couloir 8, puis introduit dans le groupe d'usinage A à travers la broche de la poupée 3, jusqu'à ce que l'extrémité correspondante puisse être
serrée au moyen du mandrin expansible 5 porté par la contrepoupée 4 et/ou des mandrins disposés sur la poupée.

Après usinage de ladite extrémité, au moyen d'outils appropriés
à commande numérique ou mécanique, le tube est ressorti du
groupe d'usinage A, toujours sur le couloir 8, puis transféré
latéralement sur le troisième couloir 9. Il est alors transféré longitudinalement à travers le tunnel 6 ménagé dans le
bâti de la machine 1, jusque sur le quatrième couloir 14.

Du couloir 14, le tube est ensuite transféré latéralement sur
le cinquième couloir 15, puis introduit dans le groupe d'usinage B à travers la broche de la poupée 3, jusqu'à ce que
l'autre extrémité du tube, non encore usinée, puisse être serrée suivant les mêmes modalités que pour le groupe d'usinage
A. Simultanément, un autre tube est introduit dans le groupe
d'usinage A en vue de l'usinage de sa première extrémité.

Après usinage de sa deuxième extrémité, le tube T est ressorti longitudinalement du groupe d'usinage B sur le couloir 15,
puis évacué latéralement ou longitudinalement suivant les cas
pendant qu'un autre tube entre dans le circuit.

Une telle installation permet donc en définitive d'usiner rapidement, en un seul cycle d'usinage et avec un encombrement
au sol relativement peu important, les deux extrémités d'un
tube ou de tout autre produit long (connexion de pompes immergées, lignes d'arbre de transmission, etc...)

Revendications

1. Installation pour l'usinage des deux extrémités d'un produit long tel qu'un tube de forage pétrolier, du type comprenant une machine (1) équipée de deux groupes complets d'usinage (A, B), disposés tête-bêche sur un bâti unique (2), et des moyens de transfert (7, 8, 9, 14, 15) du produit (T), caractérisée en ce que le bâti (2) de la machine (1) est pourvu d'une ouverture longitudinale (6) pour le passage du produit (T), les moyens de transfert assurant successivement l'introduction de l'une des extrémités du produit dans le premier groupe d'usinage (A), puis, après usinage de cette extrémité, un premier transfert latéral du produit jusqu'au niveau de l'ouverture (6) du bâti (2), le transfert longitudinal du produit sur toute sa longueur à travers ladite ouverture (6), un second transfert latéral du produit jusqu'au niveau du deuxième groupe d'usinage (B), et l'introduction de l'autre extrémité du produit dans ce deuxième groupe d'usinage.

2. Installation selon la revendication 1, caractérisée en ce que les moyens de transfert se composent essentiellement de couloirs d'alimentation de type connu et de dispositifs à leviers permettant de transférer latéralement le produit d'un couloir à l'autre.

Office européen
des brevets

**RAPPORT DE RECHERCHE EUROPEENNE**

EP    82   40   0977

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A-1 563 022 (SECOMMET) *Page 1, colonne de droite, lignes 27-39; page 2, colonne de gauche, lignes 1-3* | 1,2 | B 23 Q    7/00 |
| | --- | | |
| A | US-A-1 871 077 (MOWAT) | | |
| | --- | | |
| A | GB-A- 729 687 (SOCIETE) | | |
| | --- | | |
| A | GB-A- 892 018 (CALOW) | | |
| | ----- | | |

DOMAINES TECHNIQUES
RECHERCHES (Int. Cl. 3)

B 23 Q    7/00
B 23 B    5/00
B 23 B   49/00

Le présent rapport de recherche a été établi pour toutes les revendications

| Lieu de la recherche | Date d'achèvement de la recherche | Examinateur |
|---|---|---|
| LA HAYE | 09-09-1982 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82